Europäisches Patentamt

European Patent Office

Office européen des brevets

(19)

(11) Veröffentlichungsnummer: **0 208 835 B1**

(12) **EUROPÄISCHE PATENTSCHRIFT**

(45) Veröffentlichungstag der Patentschrift: 05.06.91

(51) Int. Cl.5 **C08G 12/42**

(21) Anmeldenummer: 86103633.3

(22) Anmeldetag: 18.03.86

(54) **Aminoplastformmassen mit verringerter Nachschwindung und Verfahren zu ihrer Herstellung.**

(30) Priorität: 25.04.85 DE 3514869

(43) Veröffentlichungstag der Anmeldung:
21.01.87 Patentblatt 87/04

(45) Bekanntmachung des Hinweises auf die
Patenterteilung:
05.06.91 Patentblatt 91/23

(84) Benannte Vertragsstaaten:
AT BE CH DE FR GB IT LI LU NL SE

(56) Entgegenhaltungen:
WO-A-85/00374
DE-A- 2 443 645
GB-A- 1 438 474

(73) Patentinhaber: **PERSTORP AB**

S-28480 Perstorp(SE)

(72) Erfinder: **Huthwelker, Dirk, Dr.**
**Amselweg 51**
**W-5210 Troisdorf-Kriegsdorf(DE)**
Erfinder: **Wolf, Hans**
**Langemarckstrasse 2b**
**W-5210 Troisdorf(DE)**

(74) Vertreter: **Hansen, Bernd, Dr.rer.nat. et al**
**Hoffmann, Eitle & Partner Patentanwälte Arabellastrasse 4 Postfach 81 04 20**
**W-8000 München 81(DE)**

EP 0 208 835 B1

**Beschreibung**

Die Erfindung betrifft den im Oberbegriff des Patentanspruches 1 wiedergegebenen Gegenstand.

Es ist bekannt, daß Formmassen aus Aminoplastharzen im Gegensatz zu Formmassen auf der Basis von beispielsweise Phenoplasten oder ungesättigten Polyestern bei höheren Temperaturen eine relative hohe Nachschwindung aufweisen, wenn sie nach DIN 7708 bei 80 °C oder 110 °C geprüft werden. Diese Nachschwindung ist in höchstem Maße unerwünscht, wenn diese Formmassen aus Aminoplastharzen für technische Formteile, insbesondere elektrotechnische Formteile, bei denen es auf Maßhaltigkeit und Verzugsfreiheit auch bei höheren Gebrauchstemperaturen ankommt, wegen der sonstigen günstigen Eigenschaften dieser Formmassen Verwendung finden sollen. Einem Ausweichen auf Formmassen auf der Basis ungesättigter Polyester, die die an sich gewünschten niedrigen Werte der Nachschwindung erreichen, steht auf diesen Einsatzgebieten in den meisten Fällen der wesentlich höhere Preis derartiger Polyestermassen entgegen.

Es ist zwar schon versucht worden, die Nachschwindung der Formmassen auf der Basis von Aminoplasten durch zusätzliche Verwendung anderer Kondensationskomponenten herabzusetzen. So beschreiben beispielsweise die DE-OS 28 24 437 und die veröffentlichte JA-Patentanmeldung 75 78645 die Verwendung teilverätherter Melaminharze bzw. teilverätherter Harnstoffharze, während die GB-PS 14 38 474 Harnstoff-Formaldehyd-Prekondensate beschreibt, die entweder unmittelbar durch Kondensation in Gegenwart von Methanol methoxyliert werden oder durch Mischen eines methoxylierten mit einem nicht-methoxylierten Prekondensat. Diese Harze sollen zwar nach der Verarbeitung zu Formmassen u.a. praktisch auch keine Nachschwindung mehr zeigen, doch ist die Herstellung der Harze teilweise relativ aufwendig, weil in einem zusätzlichen Arbeitsgang zunächst bei höheren Temperaturen Melamin mit einem Alkohol umgesetzt werden muß, worauf dann erst die Kondensationsreaktion stattfinden kann.

Weiterhin ist es aus der DE-OS 24 12 094 bekannt, Aminoplastharze mittels Polyamiden zu modifizieren, doch wirkt sich diese Modifikation ungünstig auf das Brandverhalten und die Wärmeformbeständigkeit (Martens-Temperatur) dieser Massen aus, wobei die Menge an zugesetztem Polyamid darüber hinaus durch die bei höheren Mengen einsetzende Unverträglichkeit begrenzt ist.

Darüber hinaus ist auch schon versucht worden, Formmassen auf der Basis von Aminoplasten durch Zusätze von Novolaken, Phenol-Resol-Harzen, Phenol oder auch Polyhydroxybenzolen, wie beispielsweise Resorcin, zu modifizieren, wie die JA-PS 74 11736 beschreibt, doch führen diese Zusätze leider zu Verfärbungen der Aminoplastharze, so daß diese Kombinationen für hellfarbige Formteile nicht verwendet werden können. Außerdem ist bei der grundsätzlich an sich möglichen Verwendung von Phenol von Nachteil, daß sich dieses mit den aminogruppenhaltigen Kondensationskomponenten Melamin bzw. Harnstoff im wäßrigen Formaldehyd nicht zusammen kondensieren läßt, so daß das Phenol bis zum Formvorgang in freier Form in der Harzmasse vorliegt, was bei Mengen von mehr als 1 % Phenol bereits die Kennzeichnung der Formmassen und außerdem spezielle Arbeitsschutzmaßnahmen beim Verarbeiter erforderlich macht. Hinzukommt, daß Phenol bei Temperaturen über 100 °C bereits in erheblichem Umfange flüchtig ist, was beim Trocknen der Formmassen bei Temperaturen von ca. 150 °C während ihrer Fertigung die Phenolkonzentration in der Abluft stark erhöhen würde.

Der Erfindung liegt die Aufgabe zugrunde, Aminoplastharz-Formmassen auf der Basis aminogruppenhaltiger Kondensationskomponenten und Formaldehyd, die durch Modifizierung mit Mitteln, die keine unerwünschten Wirkungen in bezug auf die Farbstabilität und die weiteren günstigen mechanischen Eigenschaften auslösen, wie dies bei den bisherigen Modifikationsmitteln der Fall gewesen ist, sich andererseits aber ebenfalls durch verringerte Nachschwindung auszeichnen, sowie auch ein Verfahren zur Herstellung dieser Formmassen verfügbar zu machen.

Die Lösung dieser Aufgabe sind Aminoplastharz-Formmassen mit dem im kennzeichnenden Teil des Patentanspruchs 1 sowie in den Unteransprüchen angegebenen Merkmalen. Das Verfahren zur Herstellung dieser Formmassen ist im kennzeichnenden Teil des Verfahrensanspruches wiedergegeben.

Bei den Formmassen gemäß der Erfindung hat es sich als besonders günstig erwiesen, wenn diese 10 bis 20 Gew.-% Monophenylglykole, bezogen auf die aminogruppenhaltige Kondensationskomponente, einkondensiert enthalten, da dann die Normwerte gemäß DIN 7708 voll erreicht werden. Darüber hinaus bringt es keine Nachteile, wenn das als technisches Produkt zum Einsatz kommende Monophenylglykol zusätzlich noch Monophenyldiglykol und/oder Monophenyltriglykol enthält; denn die Eigenschaften der Endprodukte werden hierdurch, wenn überhaupt, dann nur unwesentlich beeinflußt. Die Vorteile der Einkondensation der Monophenylglykole bestehen in erster Linie darin, daß diese sehr gut verträglich sind mit den Harnstoff-bzw. Melaminharzen, so daß auch bei hohen Zusatzmengen kein Ausschwitzen zu beobachten ist. Die Monophenylglykole lösen sich gut in wäßrigen Lösungen von aminogruppenhaltigen Kondensationskomponenten und Formaldehyd, so daß ihre Einkondensation keinerlei Schwierigkeiten berei-

2

tet. Weiterhin ist es von großem Vorteil, daß im Gegensatz zu Phenol die Monophenylglykole bei der Harzkondensation nahezu vollständig in die Harze eingebaut werden, so daß die Formmassen nach dem Trocknen kaum noch freie Monophenylglykole enthalten. Es konnte festgestellt werden, daß beispielsweise bei dem Einkondensieren von 10 % Monophenylglykol, bezogen auf Harnstoff, im Ätherextrakt nur noch Anteile von weniger als 1 % Monophenylglykol vorlagen, während bei einem Vergleichstest unter Verwendung von Phenol anstelle von Monophenylglykol freies Phenol nach dem Trocknen der Formmasse noch fast quantitativ nachgewiesen wurde. Verfärbungen von Formmassen mit einkondensierten Monophenylglykolen konnten auch bei Mengen von mehr als 20 % an diesen Modifizierungsmitteln nicht festgestellt werden.

Bei der Herstellung der Formmassen gemäß der Erfindung sind keine Nachteile, wie Werkzeugverschleiß, Erhöhung der Dichte, Arbeitsschutz- und Abluftprobleme oder Verfärbungen sowohl der Formmassen als auch der Endprodukte feststellbar, während es sich als besonders vorteilhaft erwiesen hat, daß die Herstellung der Formmassen als sog. 1-Topf-Reaktion kostengünstig erfolgen kann.

Bei der Überprüfung von Fertigteilen aus den Formmassen gemäß der Erfindung konnten sehr günstige Werte in bezug auf die verringerte Nachschwindung erhalten werden. So wurde bei Harnstoffharz-Formmassen nach dem Pressen und nach 168 h Lagerung bei 110 °C eine Reduzierung der Nachschwindung von ca. 1,6 % auf ca. 0,8 bis 1,2 % beobachtet, während unter den gleichen Bedingungen bei Melaminharz-Formmassen die Nachschwindung von ca. 2 % auf 1 % reduziert werden konnte.

An DIN-Normstäben wurden nach 7 Tagen bei 80 °C Nachschwindungswerte von 0,3 bis 0,5 ‰ gemessen, während bei Standardmassen die Nachschwindung ca. 0,7 bis 1 % beträgt.

Die Erfindung wird durch die folgenden Beispiele und Vergleichsbeispiele näher erläutert. Die ermittelten Ergebnisse sind in den Tabellen I und II zusammengefaßt, wobei noch zu bemerken ist, daß die Formteile bereits nach einer Preßzeit von 30 s blasenfrei waren.

Vergleichsbeispiel A

Ein Ansatz aus 1300 g Harnstoff und 2635 g einer 37 %igen wäßrigen Formaldehyd-Lösung (Mol-Verhältnis Harnstoff/Formaldehyd 1 : 1,50) wurde nach Zugabe von 2 g Natriumformiat 4 h bei < 40 °C kondensiert. Nach Abkühlung wurden 1967 g dieses Flüssigharzes mit 11 g $ZnSO_4$ . $7H_2O$ (in wäßriger Lösung) als Härter, Gleitmittel und 425 g Zellstoff versetzt, worauf das erhaltene Gemisch bei Temperaturen zwischen 70 ° und 80 °C getrocknet, anschließend nachverdichtet und daraufhin granuliert wurde.

Beispiel 1

Ein Ansatz aus 1250 g Harnstoff, 2534 g einer 37%igen wäßrigen Formaldehyd-Lösung (Mol-Verhältnis Harnstoff /Formaldehyd 1 : 1,50) und 150 g Monophenylglykol wurde nach Zugabe von 2 g Natriumformiat 4 h bei < 40 °C kondensiert. Nach Abkühlung wurden 1967 g dieses Flüssigharzes mit 14 g $ZnSO_4$ . $7H_2O$ (in wäßriger Lösung) als Härter, Gleitmittel und 425 g Zellstoff versetzt, worauf das erhaltene Gemisch bei Temperaturen zwischen 70 ° und 80 °C getrocknet, anschließend nachverdichtet und daraufhin granuliert wurde.

Beispiel 2

Ein Ansatz aus 1226 g Harnstoff und 2484 g einer 37%igen wäßrigen Formaldehyd-Lösung (Mol-Verhältnis Harnstoff/Formaldehyd 1 : 1,50) und 230 g Monophenylglykol wurde nach Zugabe von 2 g Natriumformiat 4 h bei < 40 °C kondensiert. Nach Abkühlung wurden 1967 g dieses Flüssigharzes mit 17,5 g $ZnSO_4$ . $7H_2O$ (in wäßriger Lösung)als Härter, Gleitmittel und 425 g Zellstoff versetzt, worauf das erhaltene Gemisch bei Temperaturen zwischen 70 ° und 80 °C getrocknet, anschließend nachverdichtet und daraufhin granuliert wurde.

Die Ergebnisse in bezug auf die Nachschwindung eines gepreßten Formteils (Platte von 80 mm Durchmesser und 1 mm Dicke) unter Verwendung der Formmassen des Vergleichsbeispieles A und der Beispiele 1 und 2 sind in Tabelle I zusammengefaßt.

Vergleichsbeispiel B

Ein Ansatz aus 1250 g Melamin und 1590 g einer 37%igen wäßrigen Formaldehyd-Lösung (Mol-Verhältnis Melamin /Formaldehyd 1 : 1,98) wurde nach Zugabe von 1 g Natriumformiat ca. 30 min bei 80 °C kondensiert. Nach Abkühlung wurden 1420 g dieses Flüssigharzes mit 1,1 g $ZnSO_4$ . $7H_2O$ (in wäßriger

Lösung) als Härter, Gleitmittel und 420 g Zellstoff versetzt, worauf das erhaltene Gemisch bei Temperaturen zwischen 70 ° und 80 ° C getrocknet, anschließend nachverdichtet und daraufhin granuliert wurde.

Beispiel 3

Ein Ansatz aus 1188 g Melamin, 1512 g einer 37%igen wäßrigen Formaldehyd-Lösung (Mol-Verhältnis Melamin /Formaldehyd 1 : 1,98) und 140 g Monophenylglykol wurde nach Zugabe von 1 g Natriumformiat ca. 30 min bei 80 ° C kondensiert. Nach Abkühlung wurden 1420 g dieses Flüssigharzes mit 1,5 g $ZnSO_4$ . $7H_2O$ (in wäßriger Lösung) als Härter, Gleitmittel und 420 g Zellstoff versetzt, worauf das erhaltene Gemisch bei Temperaturen zwischen 70 ° und 80 ° C getrocknet, anschließend nachverdichtet und daraufhin granuliert wurde.

Beispiel 4

Ein Ansatz aus 1162 g Melamin, 1478 g einer 37%igen wäßrigen Formaldehyd-Lösung (Mol-Verhältnis Melamin /Formaldehyd 1 : 1,98) und 200 g Monophenylglykol wurde nach Zugabe von 1 g Natriumformiat ca. 30 min bei 80 ° C kondensiert. Nach Abkühlung wurden 1420 g dieses Flüssigharzes mit 1,8 g $ZnSO_4$ . $7H_2O$ (in wäßriger Lösung) als Härter, Gleitmittel und 420 g Zellstoff versetzt, worauf das erhaltene Gemisch bei Temperaturen zwischen 70 ° und 80 ° C getrocknet, anschließend nachverdichtet und daraufhin granuliert wurde.

Die Ergebnisse in bezug auf die Nachschwindung eines gepreßten Formteils (Platte von 80 mm Durchmesser und 1 mm Dicke) unter Verwendung der Formmassen des Vergleichsbeispieles B und der Beispiele 3 und 4 sind in Tabelle II zusammengefaßt.

Die Härtungsgeschwindigkeit der in diesen Tabellen genannten, bei der Prüftemperatur von 160 ° C. den angegebenen Preßzeiten und einem Preßdruck von ca. 490 bar gewonnenen Formteilen wird ermittelt, indem diese nach etwa 24-stündiger Lagerung in der wäßrigen Lösung des Rotfarbstoffs "Rhodamin Bextra" entsprechend DIN 53 499 0,5 h gekocht, mit heißem Wasser gespült, getrocknet und auf Raumtemperatur abgekühlt wurden. Die Intensität des Härtungsgrades wird durch die Kennzahlen 1 bis 6 eingestuft, wobei die Kennzahl 1 keine Anfärbung bei sehr guter Aushärtung und Kennzahl 6 starke Anfärbung bei unzureichender Aushärtung bedeuten.

T a b e l l e   I

|  | Vergleichs-beispiel A | Beispiel 1 | Beispiel 2 |
|---|---|---|---|
| Nachschwindung 168 h/110 °C (%) | 1,55 | 1,1 | 0,8 - 0,9 |
| Fluß nach Herstellung (mm/s) | 53/21 | 49/22 | 50/23 |
| Fluß nach Lagerung 4 Tage/50 °C (mm/s) | 39/23 | 38/25 | 42/24 |
| $H_2O$-Gehalt (%) | 4,8 | 4,9 | 4,9 |
| Härtungsgeschwindigkeit | | | |
| Aushärtungsgrad bei einer Prüftemperatur von 160 °C und Preßzeiten von | | | |
| 30 s | 3 | 3 | 3 |
| 45 s | 3 | 3 | 3 |
| 60 s | 3 | 3 | 3 |
| 75 s | 2 | 2 | 2 |
| 90 s | 2 | 2 | 2 |

EP 0 208 835 B1

Tabelle II

| | Vergleichs-<br>beispiel B | Beispiel 3 | Beispiel 4 |
|---|---|---|---|
| Nachschwindung 168 h/110 °C (%) | 2,0 – 2,2 | 1,3 | 1,0 |
| Fluß nach Herstellung (mm/s) | 65/15 | 67/15 | 69/15 |
| Fluß nach Lagerung 4 Tage/50 °C (mm/s) | 65/20 | 66/18 | 60/17 |
| $H_2O$-Gehalt (%) | 6,0 | 5,5 | 5,6 |
| Härtungsgeschwindigkeit | | | |
| Aushärtungsgrad bei einer Preßtemperatur von 160 °C und Preßzeiten von | | | |
| 30 s | 3 | 3 | 3 |
| 45 s | 3 | 3 | 3 |
| 60 s | 3 | 3 | 3 |
| 75 s | 2 | 3 | 3 |
| 90 s | 2 | 2 | 2 |

**Ansprüche**

1. Aminoplastharz-Formmassen mit verringerter Nachschwindung auf der Basis aminogruppenhaltiger Kondensationskomponenten und Formaldehyd, dadurch gekennzeichnet, daß sie Monophenylglykole einkondensiert enthalten.

2. Aminoplastharz-Formmassen nach Anspruch 1, dadurch gekennzeichnet, daß sie 1 bis 50 Gew.-% Monophenylglykole, bezogen auf die aminogruppenhaltige Kondensationskomponente, einkondensiert enthalten.

3. Aminoplastharz-Formmassen nach Anspruch 2, dadurch gekennzeichnet, daß sie 10 bis 20 Gew.-% Monophenylglykole, bezogen auf die aminogruppenhaltige Kondensationskomponente, einkondensiert enthalten.

4. Aminoplastharz-Formmassen nach einem der Ansprüche 1 bis 3, dadurch gekennzeichnet, daß sie als Monophenylglykol ein technisches, Monophenyldiglykol und/oder Monophenyltriglykol zusätzlich enthaltendes Monophenylglykol einkondensiert enthalten.

5. Aminoplastharz-Formmassen nach einem der Ansprüche 1 bis 4, dadurch gekennzeichnet, daß sie als aminogruppenhaltige Kondensationskomponente Harnstoff einkondensiert enthalten.

6. Aminoplastharz-Formmassen nach einem der Ansprüche 1 bis 4, dadurch gekennzeichnet, daß sie als aminogruppenhaltige Kondensationskomponente Melamin einkondensiert enthalten.

6

7. Verfahren zur Herstellung von Aminoplastharz-Formmassen nach den Ansprüchen 1 bis 6, dadurch gekennzeichnet, daß die Monophenylglykole in der Formaldehyd und aminogruppenhaltige Kondensationskomponente enthaltenden wäßrigen Lösung gelöst und die anschließende Kondensation dieses Gemisches in an sich bekannter Weise durchgeführt wird.

Patentansprüche für folgenden Vertragsstaat: AT

1. Verfahren zur Herstellung von Aminoplastharz-Formmassen mit verringerter Nachschwindung auf der Basis aminogruppenhaltiger Kondensationskomponenten und Formaldehyd, bei denen Monophenylglykole einkondensiert sind, dadurch **gekennzeichnet**, daß die Monophenylglykole in der Formaldehyd und aminogruppenhaltige Kondensationskomponente enthaltenden wäßrigen Lösung gelöst und die anschließende Kondensation dieses Gemisches in an sich bekannter Weise durchgeführt wird.

2. Verfahren gemäß Anspruch 1, dadurch **gekennzeichnet**, daß man 1 bis 50 Gew.% Monophenylglykole, bezogen auf die aminogruppenhaltige Kondensationskomponente, einkondensiert.

3. Verfahren gemäß Anspruch 2, dadurch **gekennzeichnet,** daß man 10 bis 20 Gew.% Monophenylglykole, bezogen auf die aminogruppenhaltige Kondensationskomponente, einkondensiert.

4. Verfahren gemäß einem der Ansprüche 1 bis 3, dadurch **gekennzeichnet**, daß man als Monophenylglykol ein technisches Monophenyldiglykol und oder Monophenyltriglykol zusätzlich enthaltendes Monophenylglykol einkondensiert.

5. Verfahren gemäß einem der Ansprüche 1 bis 4, dadurch **gekennzeichnet**, daß man als aminogruppenhaltigeKondensationskomponente Harnstoff einkondensiert.

6. Verfahren gemäß einem der Ansprüche 1 bis 4, dadurch **gekennzeichnet**, daß man als aminogruppenhaltige Kondensationkomponente Melamin einkondensiert.

## Claims

1. Aminoplastic resin moulding compositions with reduced after-shrinkage based on amino group-containing condensation components and formaldehyde, characterised in that they contain monophenylglycols incorporated by condensation.

2. Aminoplastic resin moulding compositions according to claim 1, characterised in that they contain 1-50 wt.% monophenylglycols, referred to the amino group-containing condensation component, incorporated by condensation.

3. Aminoplastic resin moulding compositions according to claim 2, characterised in that they contain 10-20 wt.% monophenylglycols, referred to the amino group-containing condensation component, incorporated by condensation.

4. Aminoplastic resin moulding compositions according to any of claims 1 to 3, characterised in that they contain as monophenylglycol a commercial monophenylglycol additionally containing monophenyldiglycol and/or monophenyltriglycol, incorporated by condensation.

5. Aminoplastic resin moulding compositions according to any of claims 1 to 4, characterised in that they contain urea as the amino group-containing condensation component, incorporated by condensation

6. Aminoplastic resin moulding compositions according to any of claims 1 to 4, characterised in that they contain melamine as the amino group-containing condensation component, incorporated by condensation.

7. Method for the preparation of aminoplastic resin moulding compositions according to claims 1 to 6, characterised in that the monophenylglycols are dissolved in the aqueous solution containing formaldehyde and amino group-containing condensation component, and subsequent condensation of this mixture is carried out in a manner known in the art.

Claims for the following Contracting State: AT

1. Method for the preparation of aminoplastic resin moulding compositions with reduced after-shrinkage based on amino group-containing condensation components and formaldehyde, in which monophenylglycols are incorporated by condensation, characterised in that the monophenylglycols are dissolved in the aqueous solution containing formaldehyde and amino group-containing condensation component, and subsequent condensation of this mixture is carried out in a manner known in the art.

2. Method according to claim 1, characterised in that 1-50 wt.% monophenylglycols, referred to the amino group-containing condensation component, are incorporated by condensation.

3. Method according to claim 2, characterised in that 10-20 wt.% monophenylglycols, referred to the amino group-containing condensation component, are incorporated by condensation.

4. Method according to any of claims 1 to 3, characterised in that a monophenylglycol additionally containing commercial monophenyldiglycol and/or monophenyltriglycol is incorporated by condensation as the monophenylglycol.

5. Method according to any of claims 1 to 4, characterised in that urea is incorporated by condensation as the amino group-containing condensation component.

6. Method according to any of claims 1 to 4, characterised in that melamine is incorporated by condensation as the amino group-containing condensation component.

**Revendications**

1. Masses à mouler en résine aminoplaste, à retrait diminué, à base de composants de condensation contenant des groupes amino et de formaldéhyde, caractérisées en ce qu'elles contiennent des monophénylglycols condensés.

2. Masses à mouler en résine aminoplaste selon la revendication 1, caractérisées en ce qu'elles contiennent de 1 à 50% en poids de monophénylglycols condensés, par rapport aux composants de condensation contenant des groupes amino.

3. Masses à mouler en résine aminoplaste selon la revendication 2, caractérisées en ce qu'elles contiennent de 10 à 20% en poids de monophényglycols condensés, par rapport aux composants de condensation contenant des groupes amino.

4. Masses à mouler en résine aminoplaste selon l'une des revendications 1 à 3, caractérisées en ce qu'elles contiennent à l'état condensé, en tant que monophénylglycol, un monophénylglycol technique contenant, en plus, du monophényldiglycol et/ou du monophényltriglycol.

5. Masses à mouler en résine aminoplaste selon l'une des revendications 1 à 4, caractérisées en ce qu'elles contiennent a l'état condensé de l'urée, en tant que composant de condensation contenant des groupes amino.

6. Masses à mouler en résine aminoplaste selon l'une des revendications 1 à 4, caractérisées en ce qu'elles contiennent à l'état condensé, de la mélamine en tant que composant de condensation contenant des groupes amino.

7. Procédé de fabrication de masses à mouler en résine aminoplaste selon les revendications 1 à 6, caractérisé en ce que l'on dissout les monophénylglycols dans la solution aqueuse contenant du formaldéhyde et des composants de condensation contenant des groupes amino et que l'on effectue, de manière connue en soi, la condensation subséquente de ce mélange.

Revendications pour l'Etat contractant suivant: AT

1. Procédé de fabrication de masses à mouler en résine aminoplaste à retrait diminué, à base de composants de condensation contenant des groupes amino et de formaldéhyde, dans lesquelles sont condensés des monophénylglycols, caractérisé en ce que l'on dissout les monophénylglycols dans la solution aqueuse contenant du formaldéhyde et des composants de condensation contenant des groupes amino et que l'on effectue de manière connue en soi la condensation subséquente de ce mélange.

2. Procédé selon la revendication 1, caractérisé en ce que l'on fait condenser de 1 à 50% en poids de monophénylglycols, par rapport aux composants de condensation contenant des groupes amino.

3. Procédé selon la revendication 2, caractérisé en ce que l'on fait condenser de 10 à 20% en poids de monophénylglycols, par rapport aux composants de condensation contenant des groupes amino.

4. Procédé selon l'une des revendications 1 à 3, caractérisé en ce que l'on fait condenser comme monophénylglyool un monophénylglycol technique contenant, en plus, du monophényldiglycol et ou du monophényltriglycol.

5. Procédé selon l'une des revendications 1 à 4, caractérisé en ce que l'on fait condenser de l'urée, en tant que composant de condensation contenant des groupes amino.

6. Procédé selon l'une des revendications 1 à 4, caractérisé en ce que l'on fait condenser de la mélamine en tant que composant de condensation contenant des groupes amino.